# EUROPEAN PATENT APPLICATION

(11) **EP 1 515 238 A2**
(43) Date of publication of application: **16.03.2005**
(21) Application number: 04103120.4
(22) Date of filing: 02.07.2004
(51) Int. Cl.: G06F 17/21

(54) **Font request processing system and method**

(30) Priority: 17.07.2003 US 621275
(71) Applicant: AGFA MONOTYPE CORPORATION, Wilmington, MA 01887-1069 (US)
(72) Inventor: Davis, William, Northbrook, IL 60062 (US); Kuhlman, Steven, St. Charles, IL 60175 (US)
(74) Representative: De Niel, Marc Alfons Jozef

(57) **Abstract**

A font manager provides a system for processing a request for fonts by applications running on a computer. The system comprises a font request interceptor that receives a demand for fonts from an application running on a computer, a font retriever that requests the demanded fonts from a remote font provider, a font installer that receives and installs the demanded fonts and a font tracker that controls the use of the fonts in response to privilege information received from the remote font provider.

## Description

### FIELD OF THE INVENTION

The present invention relates to a method for processing font requests. More specifically the invention is related to a font consumer requesting, a font provider accessing, a font provider sending and a font consumer receiving font data.

### BACKGROUND OF THE INVENTION

Today, font software is delivered to the end users through a number of different channels. Most commonly, it is provided as a component of word-processing or desktop publishing applications. Word processors and desktop publishing systems often come with a selection of preinstalled fonts. There is, however, a much larger number of fonts, also known as typefaces, that are commercially available. These fonts are sold as libraries or individually, many times via websites, to the end user. The end users can then license and download these fonts to their computers. (Note that historically the terms typeface and font had more distinct meanings. Typeface referred to design of the type and font referred to its size and characteristics, such as bold and italic. Today, the terms are typically used interchangeably. Herein, the term font refers to a set of characters of the same or related typeface.) A number of tools or utilities are available to the end users for managing their fonts. Some of these font management utilities allow fonts to be organized and installed or uninstalled onto the computer. They also allow for auto-activation of fonts with desktop publishing applications such as Quark Xpress, Adobe Illustrator, and Adobe InDesign. One problem that arises, however, is the expense of these fonts to the end users. This limits the selection and availability of fonts at commercial institutions where budgets may be limited and users such as artists and designers. These users would like to have a broad selection of fonts to choose from, but many times they can not afford to purchase a license for an entire typeface library or collection. Single typefaces or fonts are sold for $20 to $50, but a library with 1,500 typefaces can cost many thousands of dollars. Moreover, even if the institution or user can afford to purchase the typefaces, they must often comply with the licensing requirements for the typefaces. Typefaces typically come with an "end user" license agreement (EULA). These agreements allow for fonts to be permanently installed on a limited number of computers. Thus, the institution must ensure that they have not exceeded the authorization of their license. Typically, if they do, they must then seek additional user licenses. These problems are further compounded by the large number of available typefaces and the degree to which new typefaces become available. New typeface designs and font software are released continuously by a wide variety of established type companies. Also, there are small, independent type designers and artists, who also market their typefaces or fonts. It is difficult for the end users and system administrators to keep up-to-date with the new typeface releases. The problems associated with access to fonts typically arise in a number of scenarios. Documents are transmitted from one end user to another and most commonly between institutions. The recipient of the document may not have the necessary fonts installed on their system. This occurs quite often in the desktop publishing and design markets when files are sent from a designer to a client, or from an ad agency to a service bureau. The missing font problem also occurs in corporate markets when documents are sent between companies or outside the company, as they exchange presentations. Many times the client, for example, will not be a subscriber to the same typeface libraries as the designers. Thus, when the client opens the documents, it will be displayed either with a substitute font or the wrong font. The problem of missing fonts may not even be known to the user. Most desktop publishing software will prompt the user if a font is missing or not available. The user can then manually find the missing font or select a different font. As a result, in the desktop publishing market, the end user is aware of the "missing fonts" problem. In contrast, in the corporate market, this problem many times is not as evident. Microsoft® Office®automatically substitutes for the missing fonts to hide the problem. Thus, the user is not burdened with finding the font or selecting a replacement font. This leads to a cascade of other problems, however, especially when there is a need to maintain the integrity with the original. Text, headlines, body copy, and footnotes may not match and the pages will reflow, changing the layout and imposition. On the other hand, problems also arise on the side of the font provider. Font file formats, many times, do not have any encryption or anti-piracy features. Thus they can be illegally copied, much like other data. Thus, the font providers must rely on the end users compliance with the licensing agreements. A number of systems are available for limited font management and substitution tools. The web embedding fonts tool (WEFT) is a Windows® operating system tool for web authors to create "font objects". These are linked to their web page, so that when a browser views the pages, the intended font style will be provided. The font management tool handles the work of creating the font objects and linking them to the web pages. They analyze each page and build an accurate picture of the font usage. The tool will then create compressed font objects, containing the required characters. Finally, it allows the code in the web pages to link to the font objects. The font objects created by WEFT differ from traditional font files in a number of ways. Font objects are compressed and usually subsetted, so that they only contain the characters used by the particular site or page. This means that font object file sizes are much smaller than those of ordinary files associated with TrueType or PostScript, for example. A further consideration is the evolution of how application software is delivered to the end user and the relationship between the end user and the application software provider. Some anticipate that the typical user will receive application software via servers in the future. The application software will be available for specific durations and will typically be automatically updated during the term in which it is available or licensed to the end user.

### SUMMARY OF THE INVENTION

The above-mentioned problems are solved by a method having the specific features set out in claim 1. Specific features for preferred embodiments of the invention are set out in the dependent claims.

As a result of the current state of the technology, end users requiring fonts are typically presented with one or two choices. Either they can substitute for the desired font, which may degrade the organization and presentation of the document. Or, they can purchase the font or required font library. This typically takes time and can be very expensive to the end user, which has only limited need for such a resource. Moreover, as application software migrates to web-based, and not workstation-based, there will need to be features to support fonts on a workstation or a web server. The present invention is directed to a font request processing system. It allows for the licensing of font software, for example using a rental model. This differs from the conventional techniques for distributing fonts, which require their purchase. In the present system, the font is delivered to the end user or font consumer, the system providing for the ability to control the degree to which the end users can access the font and how long it is available to them. The end user license provided with the font preferably does not provide for the perpetual licensing of the font to the user, but instead, the font is made available only for a limited time. As a result, the cost can be reasonable and the users are not forced to purchase more than they require, the limited term of use being enforced by the system. In general, according to one aspect, the invention features a method for the processing of font requests. This method comprises a font consumer that requests a font from a font provider. The font provider accesses subscription information for the font consumer. The font provider then sends the requested font to the font consumer, depending on the subscription information. In this way, the font consumer, by defining their subscription and their request, can purchase access to the font only to the extent they require. The font consumer then receives the requested font and provides the requested font to the application where it is required. In the preferred embodiment, the step of the font consumer requesting the font from the font provider comprises the font consumer accessing a web interface for the font provider and then logging on to the website. The font consumer then identifies the requested font. Preferably, the font provider accesses subscription information for the font consumer. It looks up the font consumer in a subscriber database and reads the font privileges associated with the font consumer. An account for the font consumer then can be debited, for example. Further, according to the preferred embodiment, the font provider encrypts the font prior to transmission to the font consumer. This provides piracy protection for the font provider. In the preferred embodiment, the font provider also provides privilege information with the font. The privilege information defines approved uses for the requested font by the font consumer. In this way, print, view, save privileges can be defined. Moreover, the time for which the font consumer may use the font can also be specified. This is lifetime information, which is usually consonant with the license grant defining the rental period. In the preferred embodiment, the font consumer installs the font locally. This installation preferably occurs into random access, protected memory. In general, according to another aspect, the invention also features a font manager for a computer. This manager comprises a font request interceptor. This receives demands for fonts from applications running on the computer. A font retriever then requests the demanded font from a remote, font provider, in the case where the demanded font is not already installed on the computer. A font installer receives and installs the demanded font from the font provider. A font tracker is also provided for controlling the use of the demanded font by the application, in response to privilege information received from the remote font provider. In general, according to still another aspect, the invention features a method for the distribution of fonts. The above and other features of the invention including various novel details of construction and combinations of parts, and other advantages, will now be more particularly described with reference to the accompanying drawings and pointed out in the claims. It will be understood that the particular method and device embodying the invention are shown by way of illustration and not as a limitation of the invention. The principles and features of this invention may be employed in various and numerous embodiments without departing from the scope of the invention. Further advantages and embodiments of the present invention will become apparent from the following description and drawings.

### BRIEF DESCRIPTION OF THE DRAWINGS

In the accompanying drawings, reference characters refer to the same parts throughout the different views. The drawings are not necessarily to scale; emphasis has instead been placed upon illustrating the principles of the invention.

Of the drawings:
Fig. 1 is a schematic block diagram of a system for processing font requests, according to the present invention;
Fig. 2 is a flow diagram illustrating a method for the processing font requests, according to the present invention;
Fig. 3 is a block diagram of a font manager, according to the present invention; and
Fig. 4 is a block diagram illustrating the font packet sent by the font provider to the font consumer.

### DETAILED DESCRIPTION OF THE INVENTION

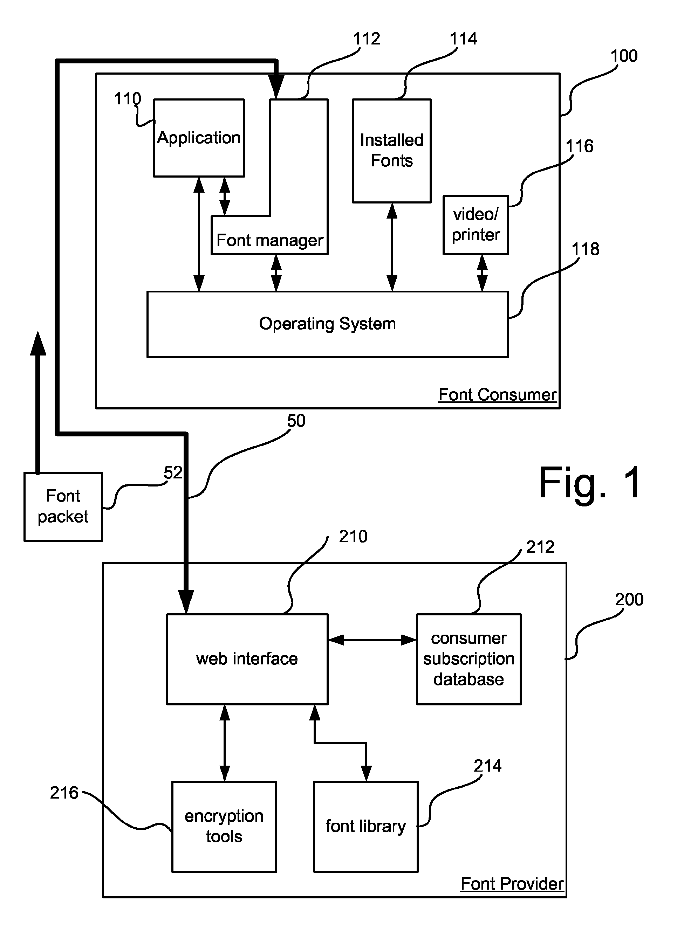

Fig. 1 shows a system for the processing of font requests, which has been constructed, according to the principles of the present invention. In more detail, the system comprises a font consumer 100. In the typical example, this is a personal or workstation computer that is operated by an individual or organization that requires access to fonts, but for which it may not be feasible to purchase an entire font library covering all of the fonts that are currently required or may be required in the future. The font consumer computer 100 includes an operating system 118. An application 110 runs on this operating system 118. This application 110 is typically a word processing or desktop publishing application that periodically requires access to new fonts. When the application 110 requires a new font, such as when it opens a document containing a font not installed on the operating system 118 or when a new document is created and the user wants a specific font or a wide selection of fonts, according to the invention, the application 110 communicates with a font manager 112. In the preferred embodiment, the font manager 112 is downloaded from the website to the font consumer computer 100. In the typical example, the font manager sits between the application 110 and the operating system 118 to intercept font requests sent to the operating system 118 by the application 110. The font manager 112 accesses the installed fonts 114 via the operating system 118, or directly. If the font is already installed on the font consumer 100, and the font manager 112 passes the font of the installed fonts 114 to the application 110. In contrast, in the case where the font requested by the application 110 is not available to the font consumer 100, the user or font consumer 100, via the font manager 112, logs onto a website via a web interface 210 of a font provider 200. This font provider 200 runs on a different computer from the font consumer 100. In the preferred embodiment, there are different pricing levels that offer a variety of typeface libraries to the font consumer 100. Different pricing levels are also provided to access different capabilities or license grants such as the length of time that the font is made available to the end user. For example, a basic entry level price would only allow fonts to be used when viewing documents, but a premium service pricing would allow fonts to be embedded into the documents. Using the font manager software 112, the user browses the web interface 210 and selects the required or desired fonts. In one instance, the font manager software includes a web browser component enabling selection and downloading of fonts. This browser, in one example, displays to the end user all fonts currently in the available subscription package, and other available packages/fonts to upsell the end user. Once selected, the font provider 200 confirms that the font consumer 100 has made arrangements to pay for the use of the font. This is performed by accessing a consumer subscription database 212. In the preferred embodiment, there are different pricing levels that would offer a variety of typeface libraries to the font consumer 100. Different pricing levels are also provided to access different capabilities or license grants. For example, a basic entry level price only allows fonts to be used in viewing documents, but a premium service pricing allows fonts to be embedded into the documents. In each case, however, the license grants provide only for use for a limited period of time. Where the font consumer 100 is authorized to download the font, the web interface 210 then accesses a font library 214 to obtain the requested or required font. In the preferred embodiment, the fonts in the font library 214 are stored in a proprietary compressed format. The web interface, prior to transmission, encrypts the font using encryption tools 216. The encrypted font, combined with privilege information based on information from the consumer subscription database 212 and lifetime information, dictating how long the font consumer is authorized to have access to the font, is incorporated into a packet 52 and transmitted to the font consumer 100. The font manager 112 receives the packet 52 via the operating system 112 to decrypt and make the font available to the application 110.

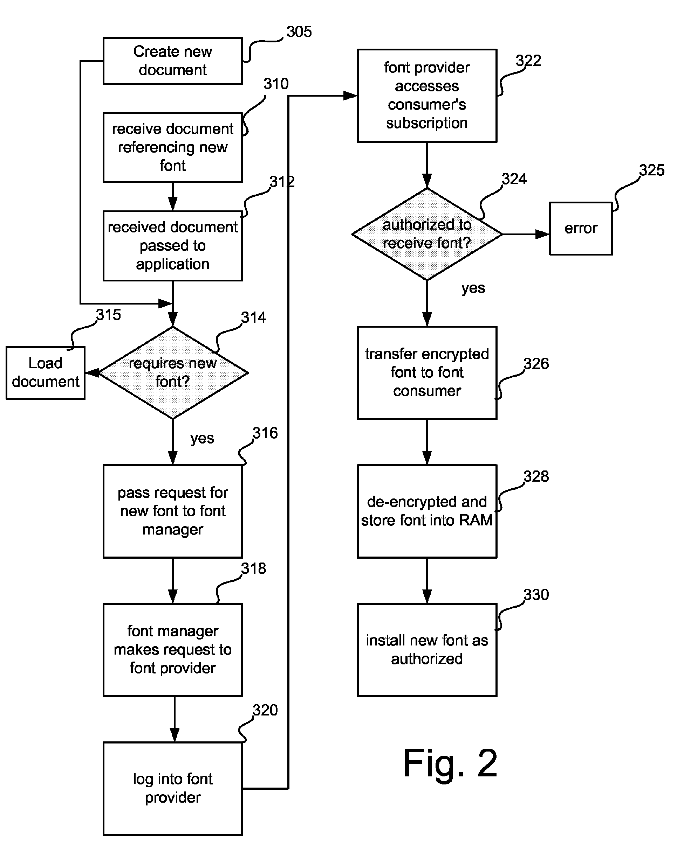

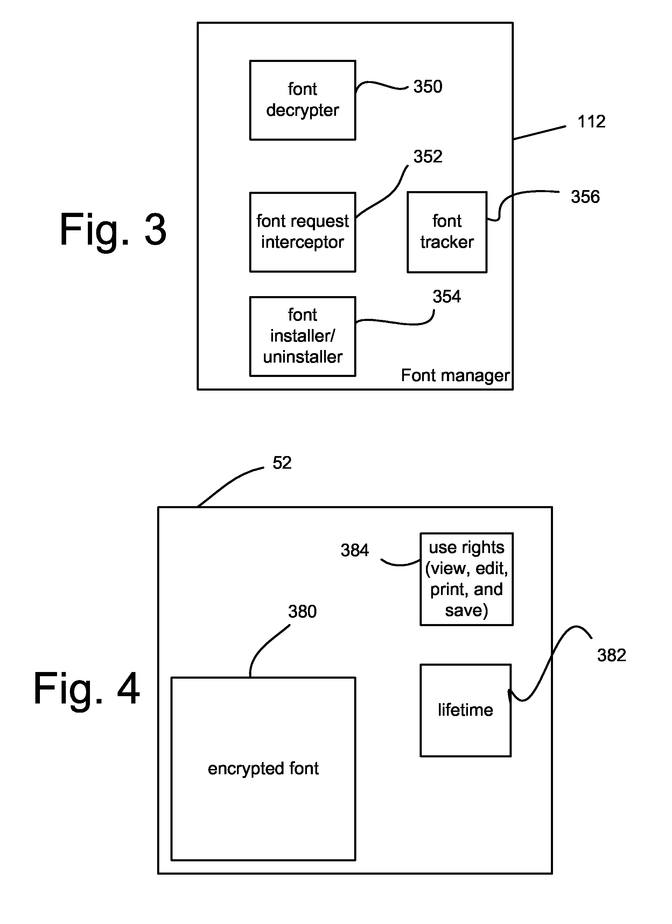

Fig. 2 is a flow diagram illustrating the method for processing the font requests, which is based on the principles of the present invention. Specifically, the font consumer 100 receives a document referencing a new font in step 310. Its received document is passed to the application such as the word processor or desktop publishing system in step 312. Alternately, a new document is opened requiring a font in step 305. The application 110 determines whether a new font is required in step 314, i.e., a font that is not currently installed on the system. If the new font is not required, then the document is simply loaded as usual, in step 315. Alternatively, the document in step 315 is loaded with font substitution. However, if a new font is required, a request for the new font is passed to the font manager 112, in step 316. The font manager 112 makes a request to the font provider 200 in step 318. Typically, it logs onto the font provider 200, in step 320. The font provider accesses the consumer subscription, in step 322, by reference to the consumer subscription database 212. The font provider 200 then makes a determination of whether or not the font consumer 100, that logged on, is authorized to receive the font in step 324. If the font consumer is not authorized to receive the font an error message is sent to the font consumer 100, in step 325. However, if the font consumer is authorized to receive the font, then the encrypted font is sent to the consumer, in step 326. The encrypted font is removed from the font packet 52 in step 328. The font is decrypted and preferably loaded into the font consumer's random access memory (RAM). The new font is then installed and passed to the application 110 in step 330. Fig. 3 illustrates the components of the font manager 112. Specifically, the font manager 112 comprises a font decryptor 350. This is the algorithm that is required to decrypt the encrypted font, which was sent by the font provider 200 in packet 52. In the preferred embodiment, the encryption is a proprietary encryption algorithm to make it less feasible to pirate the font. The font manager 112 also includes a font request interceptor 352. This is the portion of the font manager that is located between the application 110 and the operating system 118 so that requests for fonts, by the application 110 to the operating system 118, can be intercepted and then handled by the font manager 112. The font manager 112 further comprises a font installer/uninstaller 354. This component is responsible for installing the decrypted font into the font consumer 100. In the preferred embodiment, the font installer loads and installs the font into random access memory. This ensures that the font will not be permanently installed on the computer. This allows for the monitored usage of the font by the font manager 112 and further prevents its piracy. The font tracker 356 is assigned to monitor the use of the font by the application 100. It ensures that the application uses the font in a manner consistent with the privileges provided in the font packet 52, and thus the license to the end user. For example, the font tracker prevents the application 110 from printing the document, for example, if the privilege information only indicates that the user can view the document. Moreover, the font tracker, in other examples, prevents the user from embedding the font in the document if the privilege information indicates that this is not a valid use by the font consumer 100. Finally, the font tracker uninstalls the font after the expiration of the time period set by the lifetime information from the provider 200 to thereby effect the rental model. The font retriever 358 is a component that logs onto the font provider to assist in the navigation and selection of the font. Fig. 4 illustrates the components of the packet 52. Specifically, the packet comprises the encrypted font 380. It further comprises the privilege information 384. This controls the use of the font by the font consumer in a manner consistent with the license purchased by the end user. Finally, it also indicates the lifetime information 382 of the font. This sets the time after which the font installer/uninstaller will remove the font from the random access memory under the control of the tracker 356, again, in a manner consistent with the purchased license. The time tracker 356 typically gets this information from the date a time setting in the computer's operating system. While this invention has been particularly shown and described with references to preferred embodiments thereof, it will be understood by those skilled in the art that various changes in form and details may be made therein without departing from the scope of the invention encompassed by the appended claims.

## Claims

1. A method in a computer system for the processing of font requests, the method comprising:
- a font consumer (100) requesting a font from a font provider (200);
- the font provider (200) transmitting the requested font to the font consumer (100);
- the font consumer (100) receiving the requested font and providing the requested font to an application (110);
wherein:
- the font provider (200) runs on a different computer than the font consumer (100);
- the font provider (200) accesses subscription information from a subscription database (212);
- the font provider (200) transmits the requested font to the font consumer (100) depending on the state of the accessed subscription information.

2. A method according to claim 1, wherein the step of the font consumer (100) requesting the font from the font provider (200) comprises:
- the font consumer (100) accessing a web site of the font provider (200) through a web interface (210);
- the font consumer (100) logging onto the web site; and
- the font consumer (100) identifying the requested font.

3. A method according to any one of the previous claims, wherein the step of the font provider (200) accessing the subscription information for the font consumer (100) comprises:
- accessing (322) a subscriber database (212);
- looking up the font consumer (100) in the subscriber database (212); and
- reading font privileges associated with the font consumer (100) .

4. A method according to any one of the previous claims, wherein the step of the font provider (200) transmitting the requested font to the font consumer (100) comprises:
- the font provider (200) encrypting the font (380) prior to transmission to the font consumer (100);

5. A method according to anyone of the previous claims, wherein the step of the font provider (200) transmitting the requested font to the font consumer (100) comprises:
- the font provider (200) giving privilege information (384) with the font, the privilege information (384) defining approved uses for the requested font by the font consumer (100).

6. A method according to anyone of the previous claims, wherein the step of the font provider (200) transmitting the requested font to the font consumer (100) comprises:
- the font provider (200) giving lifetime information (382) with the font, the lifetime information (382) defining a time period for which the font consumer (100) is authorized to use the font.

7. A method according to anyone of the previous claims, wherein the step of the font consumer (100) receiving the requested font and providing the requested font to an application comprises:
- installing (330) the font on the font consumer (100).

8. A method according to anyone of the previous claims, wherein the step of the font consumer (100) receiving the requested font and providing the requested font to the application (110) comprises:
- installing (330) the font in random access memory of the font consumer.

9. A font manager (112) for a computer system, comprising:
- a font request interceptor (352) receiving demands for fonts from applications (110) running on a first computer;
- a font retriever running on said first computer for requesting the demanded fonts from a remote font provider (200) on a second computer if the demanded fonts are not installed on said first computer;
- a font installer (354) running on said first computer for receiving and installing the demanded fonts; and
- a font tracker (356) running on said first computer for controlling use of the demanded fonts by the applications (110) in response to privilege information (384) received from the remote font provider (200) on said second computer.

10. A font manager (112) according to claim 9, wherein the font retriever provides subscription information to the remote font provider (200).

11. A font manager (112) according to anyone of the claims 9 to 10, wherein the font retriever accesses a web site through a web interface (210) of the font provider (200) and logs (320) onto this web site to be identified by the font provider (200).

12. A font manager (112) according to anyone of the previous claims 9 to 11, wherein the font retriever decrypts the demanded font (380) .

13. A font manager (112) according to anyone of the previous claims 9 to 12, wherein the font tracker (356) monitors use of the demanded font to enforce use of the demanded fonts in a way that is consistent with the received privilege information (384).

14. A font manager (112) according to anyone of the claims 9 to 13, wherein the font tracker (356) disables the demanded fonts after expiry of a time period (382) defined by the privilege information (384).

15. A font manager (112) according to anyone of the claims 9 to 14, wherein the font installer (354) installs the demanded font into random access memory of the font consumer.
